# EUROPÄISCHE PATENTSCHRIFT

(11) **EP 0 748 753 B1**
(45) Veröffentlichungstag und Bekanntmachung des Hinweises auf die Patenterteilung: **02.11.2000**
(21) Anmeldenummer: 96108365.6
(22) Anmeldetag: 25.05.1996
(51) Int. Cl.: B65G 59/06

(54) **Vorrichtung zum Vereinzeln und Ausgeben von Gegenständen aus einem Stapel**
Device for the separation and dispensing of objects from a pile
Dispositif pour la séparation et la distribution d'objets d'une pile

(30) Priorität: 15.06.1995 CH 177395
(43) Veröffentlichungstag der Anmeldung: 18.12.1996
(73) Patentinhaber: SINOMEC AG, CH-8617 Mönchaltorf (CH)
(72) Erfinder:
(74) Vertreter: Ellenberger, Maurice

(56) Entgegenhaltungen:
- CH-A- 610 539
- FR-A- 1 363 792
- US-A- 4 624 616

## Beschreibung

Die Erfindung betrifft eine Vorrichtung zum Vereinzeln und Ausgeben in einem Stapel aneinanderliegender gleichartiger Gegenstände, mit einer Abschlusseinheit, welche durch ein erstes umlaufendes Element gebildet ist und den Stapel zeitweise gegen die Schwerkraft abstützt, mit einer Abtrenneinheit, welche allein auf den vom Stapel abzutrennenden Gegenstand wirkend ausgebildet und angeordnet ist und aus einem zweiten umlaufenden Element besteht, das mit Seitenwänden des untersten Gegenstandes in Eingriff kommt und mit einer Rückhalteeinheit welche auf mindestens eine Seitenfläche des Stapels wirkend ausgebildet ist.

Eine solche Vorrichtung ist beispielsweise aus der FR-A- 2 606 384 bekannt. Diese ist insbesondere zum Ausgeben von verschachtelten Gegenständen ausgebildet, die zudem geneigte Seitenwände aufweisen. Die Vorrichtung weist zwei identische Auswurfmechanismen auf, die je aus mehreren gesteuerten Hebeln zum Lösen, zum Rückhalten und zum Freigeben der Gegenstände bestehen. Zusätzlich sind Mittel zum Synchronisieren der vorgängig erwähnten Hebel vorgesehen.

Mit dieser bekannten Vorrichtung lassen sich aber nur Gegenstände vereinzeln und ausgeben, die eine bestimmte Form aufweisen, nämlich solche, die im Vergleich zur Seitenfläche des gesamten Stapels betrachtet, geneigte und im gestapelten Zustand parallele und teilweise aufeinanderliegende Seitenflächen aufweisen, was nur bei verschachtelten Gegenständen denkbar ist. Bei diesen verschachtelten Gegenständen sind somit die Abstände zwischen den einzelnen Gegenständen geringer als die entsprechende Dimension des Gegenstandes für sich betrachtet, beispielsweise die Höhe dieser Gegenstände. Damit ist die bekannte Vorrichtung nur für Gegenstände mit ganz bestimmten Formen ausgebildet.

Die FR-1.363.792, welche den am nächsten liegenden Stand der Technik angibt, zeigt eine Vorrichtung zum Vereinzeln und Ausgeben in einem Stapel aneinanderliegender gleichartiger Gegenstände, insbesondere Früchtebehälter, mit einer Abschlusseinheit, welche durch ein erstes umlaufendes Element gebildet ist und den Stapel über halbkreisförmige Nocken zeitweise gegen die Schwerkraft abstützt. Eine Abtrenneinheit, welche allein auf den vom Stapel abzutrennenden Gegenstand wirkend ausgebildet und angeordnet ist und aus einem zweiten umlaufenden Element, einem Finger, besteht, der in Schlitze in den Seitenwänden des untersten Gegenstandes eingreift, sowie eine Rückhalteeinheit welche auf mindestens eine Seitenfläche des Stapels wirkend ausgebildet ist, sind ebenfalls vorgesehen.

Auch mit dieser weiteren bekannten Vorrichtung lassen sich nur Gegenstände vereinzeln und ausgeben, die eine bestimmte Form aufweisen, nämlich eine solche, die im Vergleich zur Seitenfläche des gesamten Stapels betrachtet, geneigte und im gestapelten Zustand parallele und teilweise aufeinanderliegende Seitenflächen aufweist, was nur bei verschachtelten Gegenständen denkbar ist. Bei dieser Vorrichtung wird der Stapel beim Abtrennen der Gegenstände über eine relativ grosse Höhe im freien Fall nach unten gefördert und wieder aufgefangen, was eben nicht für alle Gegenstände annehmbar ist.

Gegenstand der Erfindung ist deshalb eine Vorrichtung zum Vereinzeln und Ausgeben in einem Stapel aneinanderliegender gleichartiger Gegenstände, mit der Gegenstände verarbeitet werden können, deren Formen in einem wesentlich erweiterten Bereiche variieren können. Insbesondere soll es die Vorrichtung erlauben, auch Gegenstände mit solchen Seitenflächen zu vereinzeln und auszugeben, die parallel zu den Seitenflächen des Stapels verlaufen, so dass im Stapel keine vorstehenden Ecken freistehen.

Erfindungsgemäss wird dies durch eine Abschlusseinheit, die den Stapel über seine untere Stirnfläche zeitweise gegen die Schwerkraft abgestützt fortbewegt und ein umlaufendes Element der Abtrenneinheit erreicht, das den unteren Gegenstand reibschlüssig antreibt, vom Stapel abtrennt und vom Stapel wegbewegt. Die Abschlusseinheit und die Abtrenneinheit bestehen aus umlaufenden Elementen und vorzugweise ist mindestens eine der beiden Einheiten - Abtrenneinheit und Abschlusseinheit - als Steuerelement für die Rückhalteeinheit ausgebildet. Dabei wird die Abschlusseinheit, auf der sich der Stapel zeitweise über seine Stirnfläche abstützt, durch ein umlaufendes Element gebildet, dessen Bewegungsrichtung im Bereiche des Stapels mit der allgemeinen Bewegungsrichtung des Stapels und seiner Gegenstände übereinstimmt und den Stapel gegen die Schwerkraft abgestützt fortbewegt. Das gleiche gilt für ein Element, das eine Abtrenneinheit bildet und das dafür sorgt, dass der abzutrennende Gegenstand sich auch gegen einen Widerstand vom Stapel löst. Dies wird durch Adhäsion zwischen dem Gegenstand und der Abtrenneinheit erreicht. Die Arbeitsbewegungen des Abtrennelementes und der Abschlusseinheit sind damit gleichgerichtet, synchronisiert und bei ununterbrochener Ausgabe von Gegenständen auch kontinuierlich. Die Rückhalteeinheit welche den Stapel dann zurückhält, wenn ein Gegenstand abgetrennt wird, ist so ausgebildet, dass sie einen oder mehrere benachbarte Gegenstände im Stapel festhält. Dabei wird die Rückhalteeinheit durch die Abschlusseinheit und/oder das Abtrennelement betätigt.

Die durch die erfindungsgemässe Vorrichtung erreichten Vorteile sind insbesondere darin zu sehen, dass mit dieser Vorrichtung verschiedenartigste Gegenstände vereinzelt werden können, solange sie in einem geeigneten Kanal oder Schacht stapelbar sind. So können diese gestapelten Gegenstände zusammen einen Stapel mit regelmässiger oder unregelmässiger oder unstetiger Seitenfläche bilden. Die Gegenstände können verschiedene Höhen, Breiten und Längen und auch ebene oder gewölbte Seitenflächen aufweisen. Die Elemente der Vorrichtung können nur zu einer oder auch zu mehreren Seitenflächen des Stapels benachbart angeordnet sein. Zudem ist die erfindungsgemässe Vorrichtung tolerant gegenüber Verschiebungen der Position der Gegenstände.

In konstruktiver Hinsicht ist die Vorrichtung sehr einfach und weist nur sehr wenige gegeneinander bewegliche Elemente auf. Damit lässt sie sich auch entsprechend leicht und schnell auf andere Gegenstände einstellen.

Die erfindungsgemässe Vorrichtung eignet sich insbesondere zum Einbau in Sortier- und Kommissionieranlagen wo bis zu einigen hundert solcher Vorrichtungen in einer Anlage vereinigt sind. Dabei wirkt sich die einfache Arbeitsweise und Konstruktion besonders günstig auf die Kosten und die Zuverlässigkeit der Anlage aus. Bevorzugte Gegenstände, für welche diese Vorrichtung vorgesehen ist, sind Behälter oder Kassetten für Ton- und/oder Bildträger wobei diese Behälter leer oder gefüllt verarbeitet werden können.

Im folgenden wird die Erfindung anhand eines Beispiels und mit Bezug auf die beiliegenden Zeichnungen näher erläutert, wobei
Figur 1 einen Längsschnitt durch einen Teil der Vorrichtung,
Figur 2 einen Querschnitt durch den Teil der Vorrichtung gemäss Fig. 1,
Figur 3 eine Ansicht des Teils gemäss Fig. 1,
Figuren 4, 5, 6, 7 und 8 je einen Teil der Vorrichtung mit beweglichen Elementen in verschiedenen Stellungen und
Figuren 9 und 10 je eine weitere Ausführungsform eines Teils der Vorrichtung zeigen.

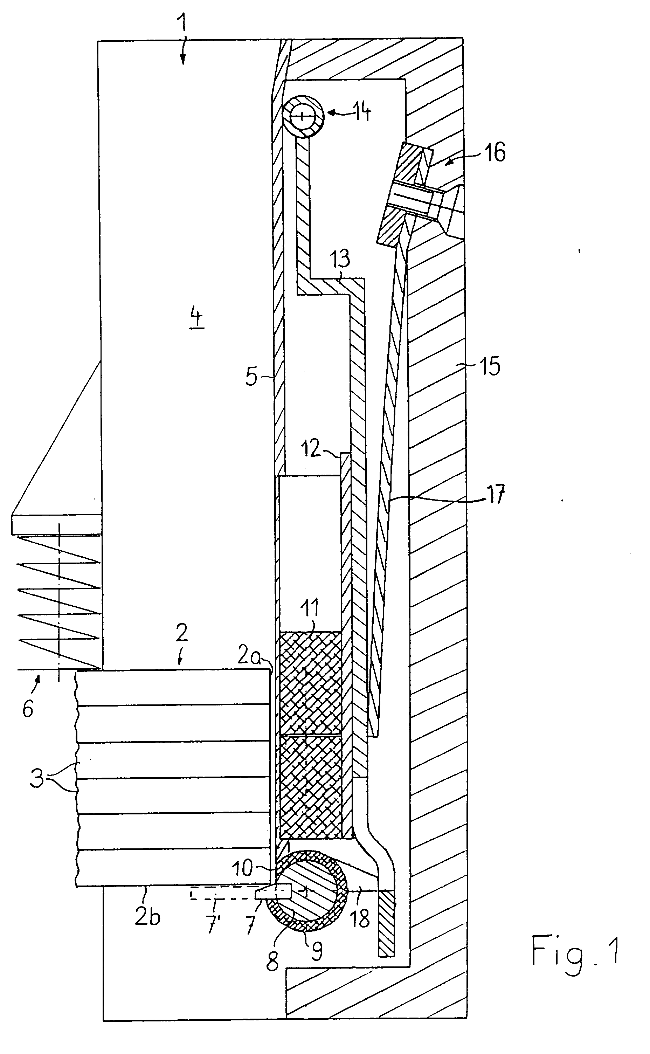

In Fig. 1 erkennt man einen Teil eines Schachtes 1 in dem sich ein Stapel 2 bestehend aus mehreren unter sich gleichen Gegenständen 3 befindet. Der Stapel 2 weist mindestens eine Seitenfläche 2a und eine Stirnfläche 2b auf. Der Schacht 1 ist durch Führungen 4 und 5 gebildet, die zueinender einen hier vorzugsweise rechten Winkel bilden und die durch weitere hier nicht gezeigte aber an sich bekannte gleichartige Führungen ergänzt sind, so dass die Gegenstände 3 auf sovielen Seiten geführt sind, dass sie nicht aus dem Schacht 1 seitlich herausfallen können. In diesem Beispiel hat der Schacht 1 drei weitere Paare solcher Führungen 4 und 5 die einen rechten Winkel bilden, wenn man davon ausgeht, dass die Gegenstände 3 viereckig sind und damit ein prismatischer Stapel 2 gebildet ist. Die Gegenstände 3 sind hier lose aufeinander gelegt und durch die Schwerkraft aufeinander gedrückt. Wahlweise ist es auch möglich mit Hilfe von Federelementen 6 von denen hier nur eines schematisch gezeigt ist oder durch andere Mittel die Gegenstände gegeneinander zu drücken so dass ein Stapel auch dann entsteht, wenn der Schacht 1 nicht senkrecht steht.

In dem hier gezeigten Betriebszustand stützt sich der Stapel 2 formschlüssig auf mindestens einer Nocke 7 auf, welche auf einer Welle 8 angeordnet ist und die zusammen eine Abschlusseinheit für den Schacht 1 bilden. Auf einer Welle 8 können dabei mehrere Nocken 7 in Abständen hintereinander angeordnet sein, so dass die Gegenstände auf einer Seite gut abgestützt sind. Häufig wird mindestens eine weitere Welle, der Welle 8 gegenüberliegend angeordnet sein, um den Stapel auch auf der anderen Seite abzustützen. Allerdings ist es für schmale Gegenstände denkbar nur eine Welle 8 mit entsprechend verlängerter Nocke 7' vorzusehen, so dass diese den überwiegenden Teil der Grundfläche des Stapels abstützt. Weisen die Gegenstände oder der Stapel insbesondere mehr als vier Seitenflächen auf, so ist es möglich auch für mehr als zwei Seitenflächen je eine erfindungsgemässe Vorrichtung beispielsweise gemäss Fig. 1 anzuordnen.

Auf der Welle 8 ist ferner ein elastischer Ring 9 befestigt, der beispielsweise oberhalb des Nockens 7 eine Ausnehmung 10 aufweist und so den Nocken 7 besser freilegt. Dieser Ring 9 bildet für die Gegenstände 3 eine Abtrenneinheit.

Als Rückhalteeinheit erkennt man ferner elastische Elemente 11, die auf einer Grundplatte 12 angeordnet sind, welche wiederum auf einem Ausleger 13 festgemacht ist, der über ein Lager 14 drehbar gelagert ist. Dieses Lager 14 ruht in einem Gehäuseteil 15, in dem in einer Lagerung 16 auch eine Feder 17 festgemacht ist, die den Ausleger 13 und damit die elastischen Elemente 11 gegen den Stapel drückt. Damit dies nicht zu jeder Zeit möglich ist, ist auf der Welle 8 weiter eine Steuernocke 18 festgemacht, die beispielsweise in der hier gezeigten Stellung das Andrücken der elestischen Elemente an den Stapel verhindert.

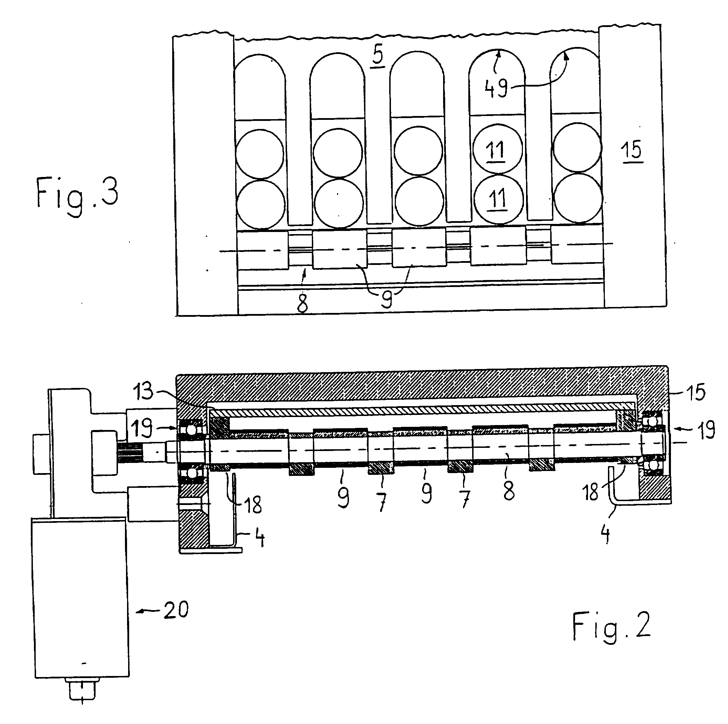

In Fig. 2 erkennt man, teilweise im Schnitt, dieselben Elemente, die schon aus Fig. 1 bekannnt sind. Dies sind insbesondere die Führungen 4, mehrere Nocken 7, die Welle 8, elastische und eventuell auch adhesive Ringe 9, den Ausleger 13, den Gehäuseteil 15 sowie zwei Steuernocken 18. Zusätzlich sind Wellenlager 19 und eine Antriebseinheit 20 gezeigt.

Fig. 3 stellt zu der Darstellung in Fig. 2 eine Ansicht dar. Darin erkennt man wiederum die Welle 8 mit den Ringen 9, elastische Elemente 11 sowie die Führung 5 und den Gehäuseteil 15.

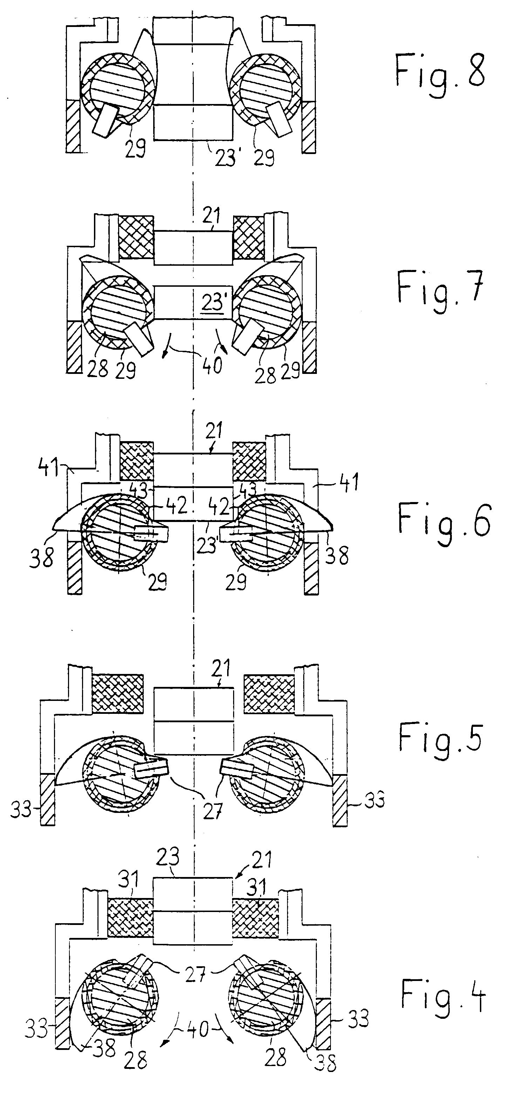

Sind die Gegenstände 3 rechteckförmig wie z.B. CD-Behälter, so besteht die gesamte Vorrichtung aus zwei einander gegenüberliegenden Elementen oder Modulen wie diese aus den Figuren 1 bis 3 bekannt sind, die je eine Welle 8 aufweisen. Davon wird für die nachfolgend behandelten Figuren 4 bis 8 ausgegangen. In diesen sind jeweils nur die wichtigsten Elemente der Abschlusseinheit, der Rückhalteeinheit und der Abtrenneinheit schematisch dargestellt. Anhand der nachfolgend beschriebenen Figuren 4 bis 8 soll auch die Wirkungsweise der Vorrichtung erläutert werden.

Fig. 4 zeigt somit einen Stapel 21 der durch die Rückhalteeinheit 31, 33 geklemmt ist, wobei die elastischen Elemente 31 hier zwei Gegenstände 23 über deren Seitenflächen reibschlüssig erfassen. Die Steuernocken 38 beginnen aus dieser Stellung die Ausleger 33 nach aussen zu drängen, wenn sich die Wellen 28 in Richtung der Pfeile 40 weiterdrehen. Dabei bewegen sich die Nocken 27 unter den Stapel 21.

Fig. 5 zeigt die Verhältnisse wenn die Ausleger 33 praktisch voll ausgelenkt sind. Dabei hat sich der Stapel 21 inzwischen gegen die Nocken 27 bewegt, die diesen nun abstützen, indem diese für den Schacht einen Abschluss bilden.

Gemäss Fig. 6 haben sich die Steuernocken 38 soweit gedreht, dass sie in eine Ausnehmung 41 im Ausleger 33 ein- oder hindurchgreifen und damit diesen nicht mehr auslenken. Die Ausleger werden nun durch die Feder 17 (Fig. 1) wieder gegen den Stapel 21 gedrückt, so dass dieser nun wieder fest- oder zurückgehalten ist. In einer nächsten hier nicht gezeigten Phase werden Kanten 42 der Ringe 29 mit Seitenwänden 43 des untersten Gegenstandes 23' des Stapels 21 in Eingriff kommen und diesen durch ihre Drehbewegung nach unten antreiben und vom Stapel 23 abtrennen.

Dies ist in der in Fig. 7 gezeigten Stellung bereits geschehen. Durch die Drehung der Wellen 28 in Richtung der Pfeile 40 wird der Gegenstand 23' durch die Ringe 29 weiter vom Stapel 21 weg befördert.

Gemäss der in der Fig. 8 gezeigten Stellung ist der Gegenstand 23' durch die Ringe 29 freigegeben worden, so dass dieser Gegenstand sich nun vom Stapel 21 abgetrennt frei, oder durch andere Einflüsse bestimmt, weiterbewegen kann.

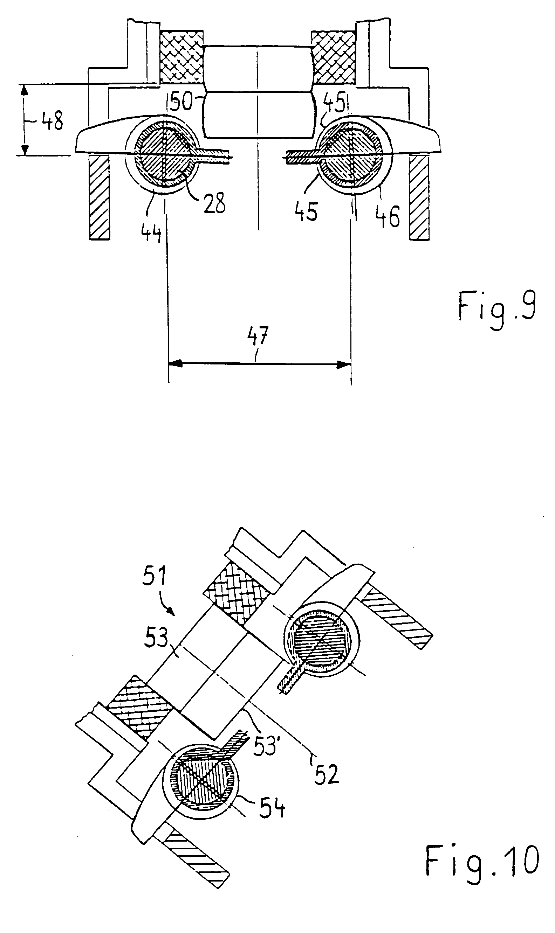

Fig. 9 zeigt eine etwas abweichende Ausführungsform für die Abtrenneinheit, die hier in Form eines ovalen oder exzentrisch auf der Welle 28 angeordneten Ringes 44 vorgesehen ist. Durch diese Anordnung hat der Ring 44 Bereiche 45 mit denen er mit den Gegenständen nicht in Kontakt treten kann und er hat Bereiche 46 mit denen er mit den Gegenständen in Kontakt treten kann, um diese anzutreiben und vom Stapel zu trennen. So können auch Stapel und Gegenstände mit unebenen Seitenwänden 50 verarbeitet werden.

Fig. 10 zeigt einen Schacht 51 für Gegenstände 53 dessen Achse 52 geneigt angeordnet ist. Damit erfährt insbsondere der abzulösende Gegenstand 53' auch seitlich auf ihn wirkende Kräfte. Durch die, bezogen auf diesen Gegenstand 53' teilweise seitliche Anordnung des Ringes 54 der Abtrenneinheit, kann sich der Gegenstand 53' auf dieser seitlich abstützen. Zudem wird er durch den umlaufenden und angetriebenen Ring 54 auch angetrieben.

Wie aus den Figuren ersichtlich, sind die Abschlusseinheit und die Abtrenneinheit einstückig oder formschlüssig beispielsweise über eine gerillte Welle 8 miteinander und in gleicher Weise auch mit einem Steuerelement, den Steuernocken 18, 28 für die Rückhalteeinheit, verbunden. So bilden die Abschlusseinheit und/oder die Abtrenneinheit direkt ein Steuerelement für die Rückhalteeinheit. Damit ist die Synchronisation zwischen diesen drei Einheiten erreicht und es müssen nicht weitere Elemente dazu vorgesehen werden. Was die Synchronisation mehrerer Elemente oder Module wie sie die Figuren 1 bis 3 zeigen, betrifft, so ist es sowohl möglich jede einzelne Welle 8 mit einem eigenen Antrieb zu versehen wie aus Fig. 2 bekannt, oder einen gemeinsamen Antrieb für mehrere Wellen vorzusehen. Im ersten Fall erfolgt die Synchronisation der Wellen 8 elektronisch, im zweiten Fall mechanisch, in beiden Fällen aber in an sich bekannter und deshalb hier nicht näher dargestellter Weise. Es ist auch möglich mehrere Vorrichtungen mit einem gemeinsamen Antrieb zu versehen. Vorzugsweise werden die Wellen 8 mit einer Verdrehsicherung ausgerüstet, so dass die Welle wirklich nur in einer Richtung angetrieben werden kann. Die sehr einfache Steuerung der einzelnen Elemente ermöglicht auch einen ausgeprägt modularen Aufbau der Vorrichtung.

Die erfindungsgemässen Vorrichtungen sind beispielsweise dazu geeignet, Gegenstände an ein Förderband abzugeben. In diesem Falle können mehrere solcher Vorrichtungen nebeneinander längs oder über einem Förderband angeordnet sein und zusammen eine sogenannte Komissioniereinheit bilden.

Die Vorrichtungen lassen sich sehr leicht auch auf die verschiedenartigsten Gegenstände und Formen der Gegenstände ausrichten. Dies beispielsweise durch Wahl eines geeigneten Achsabstandes 47 (Fig. 9) indem die Module zueinander oder auseinandergerückt werden, eines geeigneten Durchmessers der Welle 8, 28 und der Ringe 9, 29, 44, Nocken 7 und Steuernocken 18 und eines Abstandes 48 zwischen den Rückhaltemitteln und der Welle 8 der Abschluss- und Abtrenneinheit. Fig. 3 zeigt deutlich auch Ausnehmungen 49 die es erlauben, die elastischen Elemente 11 auch weiter nach oben zu schieben, um höhere Gegenstände im Schacht aufzunehmen.

## Patentansprüche

1. Vorrichtung zum Vereinzeln und Ausgeben in einem Stapel (2) aneinanderliegender gleichartiger Gegenstände (3), mit einer Abschlusseinheit, welche durch ein erstes umlaufendes Element gebildet ist und den Stapel zeitweise gegen die Schwerkraft abstützt, mit einer Abtrenneinheit (9), welche allein auf den vom Stapel abzutrennenden Gegenstand wirkend ausgebildet und angeordnet ist und aus einem zweiten umlaufenden Element (9) besteht, das mit Seitenwänden des untersten Gegenstandes in Eingriff kommt und mit einer Rückhalteeinheit (11, 13, 17) welche auf mindestens eine Seitenfläche (2a) des Stapels wirkend ausgebildet ist, dadurch gekennzeichnet, dass die Abschlusseinheit (7), den Stapel über seine untere Stirnfläche zeitweise gegen die Schwerkraft abgestützt fortbewegt und dass das umlaufende Element (9) der Abtrenneinheit den unteren Gegenstand reibschlüssig antreibt, vom Stapel abtrennt und vom Stapel wegbewegt.

## Claims

1. Device for isolating and dispensing objects (3) of the same kind lying against one another in a stack (2), the said device having a closing unit which is formed by a first revolving element and which temporarily supports the stack against gravity, having a separating unit (9) which is constructed and arranged so as to act solely on the object to be separated from the stack and consists of a second revolving element (9) which comes into engagement with side walls of the bottommost object, and having a retaining unit (11, 13, 17) which is constructed so as to act on at least one side face (2a) of the stack, characterised in that the closing unit (7) moves the stack on in a manner temporarily supported against gravity via its lower end face, and that the revolving element (9) belonging to the separating unit drives the bottom object in a frictionally engaged manner, separates it from the stack and moves it away from the latter.

## Revendications

1. Dispositif pour la séparation et la distribution d'objets similaires juxtaposés (3) dans une pile, avec une unité de fermeture qui est formée par un premier élément tournant et qui supporte la pile par moments contre la force de gravité, avec une unité de séparation (9) qui est réalisée et disposée pour agir uniquement sur l'objet à séparer de la pile et par un deuxième élément tournant (9) qui vient en prise avec des parois latérales de l'objet le plus bas et avec une unité de retenue (11, 13, 17) qui est réalisée pour agir sur au moins une face latérale (2a) de la pile, caractérisé en ce que l'unité de fermeture (7) déplace la pile, supportée par sa face frontale inférieure par moments contre la force de gravité, et en ce que l'élément tournant (9) de l'unité de séparation entraîne par prise de friction l'objet inférieur, le sépare de la pile et l'éloigné de la pile.
